# EUROPEAN PATENT APPLICATION

(11) **EP 3 424 671 A1**
(43) Date of publication of application: **09.01.2019**
(21) Application number: 17759601.2
(22) Date of filing: 09.02.2017
(51) Int. Cl.: B29C 45/26

(54) **MARKER**

(30) Priority: 29.02.2016 JP 2016037340
(71) Applicant: Enplas Corporation, Saitama 332-0034 (JP)
(72) Inventor: SAITO, Tomohiro, Saitama 332-0034 (JP)
(74) Representative: Epping - Hermann - Fischer
(86) International application number: PCT/JP2017/004796
(87) International publication number: WO 2017/150130

(57) **Abstract**

The marker according to the present invention comprises: a first surface which has light transmissivity, and in which a plurality of cylindrical projection surfaces each having a first ridge line oriented in a first direction are arranged in a second direction that is perpendicular to the first direction; and a second surface which has a plurality of to-be-detected parts that are projected onto the plurality of projection surfaces, and a reflection part that is a region other than the to-be-detected parts and includes a plurality of depressions or a plurality of protrusions. The reflection part has either a plurality of depressions which are arranged such that second ridge lines are disposed periodically or a plurality of protrusions which are arranged such that second trough bottom lines are disposed periodically. The second ridge lines or the second trough bottom lines are slanted with respect to the first ridge lines.

## Description

### Technical Field

The present invention relates to a marker.

### Background Art

As an image indicator (marker) employing a combination of a lens and a mark, an image display sheet including a lenticular lens and image formation layers is known. The lenticular lens has a structure in which a plurality of cylindrical lenses are arranged side by side. When the image indicator is viewed from of the convex surface side of the cylindrical lenses, the image of the mark moves or deforms depending on the viewing positions. Such an image indicator is useful as a marker for recognizing the position, orientation, and the like of an object in the field of augmented reality (AR), robotics and the like. In addition, various studies such as the arrangement of the mark in various uses have been made (see, for example, PTL 1).

PTL 1 discloses a marker including a lenticular sheet including a plurality of cylindrical lenses, and a color sheet including a plurality of optically discriminable reflection parts and flat parts. FIG. 1 illustrates a configuration of the marker disclosed in PTL 1. As illustrated in FIG. 1, the cylindrical lenses are disposed such that their ridgelines 22 are along the Y direction. In addition, the cylindrical lenses are arranged in the X direction orthogonal to the Y direction. Reflection part 12 includes a plurality of protrusions 16 having square pyramid shapes. Protrusions 16 are disposed such that valley bottom lines 18 between protrusions 16 are cyclically located in the X direction and Y direction. In addition, the marker disclosed in PTL 1 is manufactured by injection molding with optically transparent resin.

### Citation List

### Patent Literature

PTL 1
Japanese Patent Application Laid-Open No. 2015-194732

### Summary of Invention

### Technical Problem

When the marker disclosed in PTL 1 is manufactured by injection molding, it is conceivable to supply molten resin to the inside of a clamped metal mold along the Y direction. Then, since ridgelines 22 of the convex surfaces are disposed along the Y direction, the molten resin smoothly flows at portions corresponding to the cylindrical lens on the front side. At portions corresponding to protrusions 16 on the rear side, however, the portions corresponding to valley bottom lines 18 are disposed along the X direction and the Y direction. Consequently, at the portions corresponding to protrusions 16 on the rear side, the molten resin cannot smoothly flow in the X direction, while the molten resin can smoothly flow in the Y direction. As a result, valley bottom lines 18 between protrusions 16, which should be formed along the X direction, might not be appropriately formed. As a result, the marker disclosed in PTL 1 manufactured by injection molding might cause variation between reflection light along the X direction and reflection light along the Y direction, resulting in non-uniformity in reflection light. In addition, the marker disclosed in PTL 1 causes moire in some situation, and thus cannot provide desired optical characteristics in some situation.

That is, in the case where the marker disclosed in PTL 1 is molded by injection molding, flow of molten resin in the X direction of reflection part 12 is poor, resulting in poor optical characteristics and a low productivity of the marker.

An object of the present invention is to provide a marker which can provide high productivity while maintaining the optical characteristics.

### Solution to Problem

A marker according to an embodiment of the present invention is formed of an optically transparent material, the marker including: a first surface in which a plurality of convex surfaces each of which includes a first ridgeline extending along a first direction are arranged in a second direction perpendicular to the first direction, each convex surface having a cylindrical shape; and a second surface including a plurality of detection object parts and a reflection part including a plurality of recesses or a plurality of protrusions, the plurality of detection object parts being disposed at positions opposite to respective convex surfaces and configured to be projected onto the respective convex surfaces as optically detectable images, the reflection part being a region other than regions of the plurality of detection object parts. In the reflection part, the plurality of recesses are disposed in such a manner that second ridgelines are cyclically disposed, each second ridgeline being disposed between each recess, or the plurality of protrusions are disposed in such a manner that second valley bottom lines are cyclically disposed, each second valley bottom line being disposed between each protrusion. In plan view from the first surface side, the plurality of second ridgelines or the plurality of second valley bottom lines are tilted with respect to the first ridgeline.

### Advantageous Effects of Invention

According to the present invention, it is possible to provide a marker which can provide high productivity while maintaining the optical characteristics.

### Brief Description of Drawings

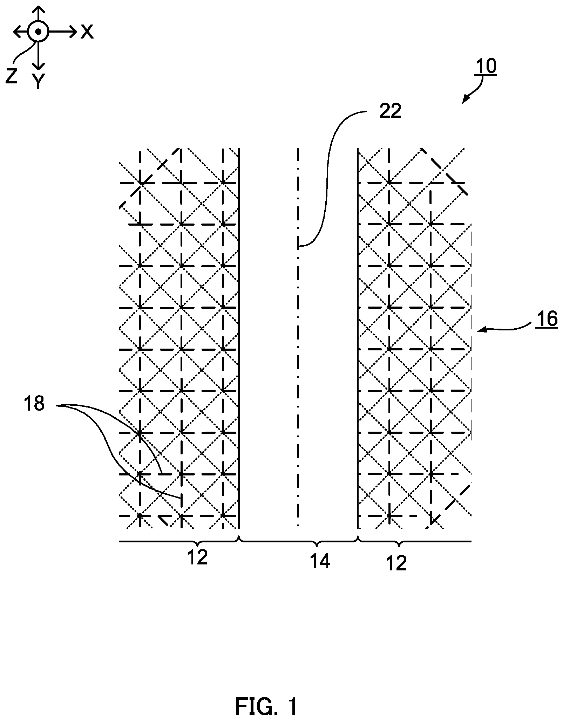

FIG. 1 illustrates a configuration of the marker disclosed in PTL 1;
FIGS. 2A and 2B illustrate a configuration of a marker according to Embodiment 1 of the present invention;
FIG. 3 is a partially enlarged plan view of a rear surface;
FIGS. 4A and 4B are schematic views for describing flow of molten resin in a filling step of injection molding;
FIG. 5 is a partially enlarged plan view of a marker according to a comparative example;
FIGS. 6A and 6B illustrate a configuration of a marker according to a modification of Embodiment 1; and
FIGS. 7A and 7B illustrate a configuration of a marker according to Embodiment 2.

### Description of Embodiments

A marker according to embodiments of the present invention is described below with reference to the accompanying drawings.

### Embodiment 1

### Configuration of marker

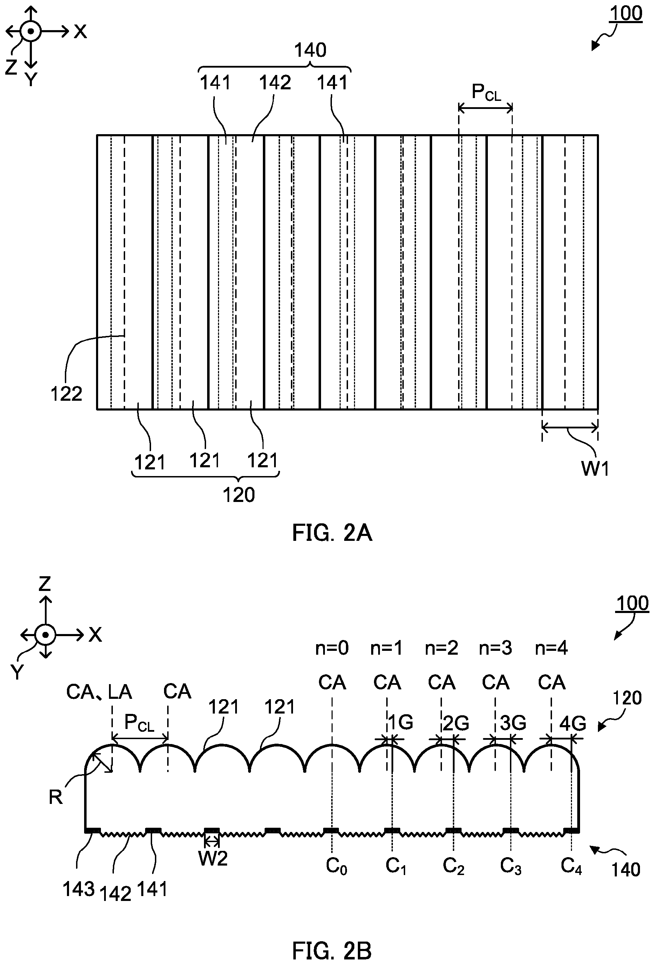

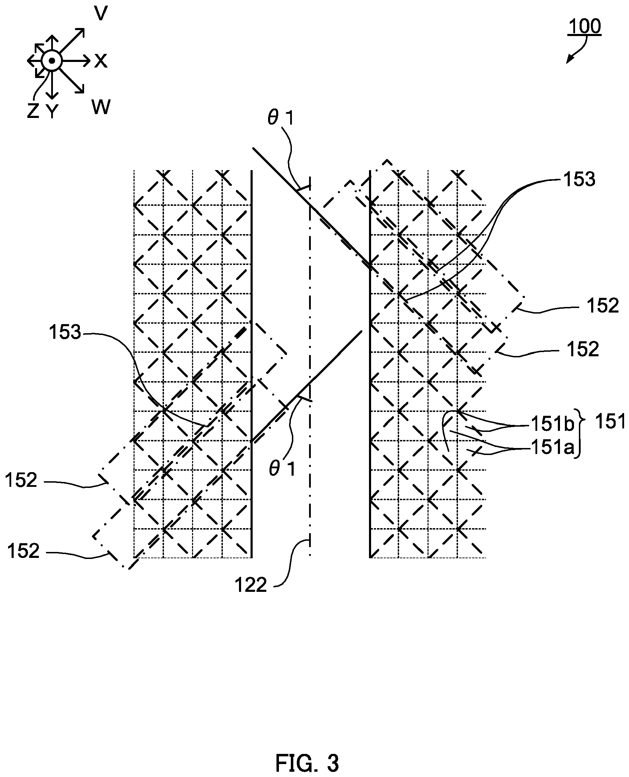

FIGS. 2A and 2B illustrate a configuration of marker 100 according to Embodiment 1 of the present invention. FIG. 2A is a plan view of marker 100 according to Embodiment 1 of the present invention, and FIG. 2B is a front view of marker 100. FIG. 3 is a partially enlarged plan view of the rear surface.

As illustrated in FIGS. 2A and 2B, marker 100 includes front surface (first surface) 120 and rear surface (second surface) 140. The material of marker 100 is not limited as long as the material is optically transparent. Examples of the material of marker 100 include transparent resins such as polycarbonate, acrylic resin, cycloolefin polymer (COP), and cycloolefin copolymer (COC); and glass. In the present embodiment, the material of marker 100 is cycloolefin copolymer (COC) having a refractive index nd of 1.54. Front surface 120 includes a plurality of cylindrical convex surfaces 121. In addition, rear surface 140 includes a plurality of detection object parts 141 and a plurality of reflection parts 142. The thickness of marker 100 is 1 mm, for example.

Convex surfaces 121 are arranged along a first direction (in FIG. 2, the X direction). Each convex surface 121 extends in a third direction (in FIG. 2, the Y direction) perpendicular to the first direction and the height direction of marker 100 (a second direction; in FIG. 2, the Z direction). Each convex surface 121 is a curved surface having a curvature only in the first direction (the X direction), and includes first ridgeline 122 linearly extending in the third direction (the Y direction). That is, marker 100 according to the present embodiment has a lenticular structure.

Two adjacent convex surfaces 121 of the plurality of convex surfaces 121 may be disposed with or without a gap therebetween. In the present embodiment, two adjacent convex surfaces 121 of the plurality of convex surfaces 121 are disposed with no gap therebetween.

Plurality of convex surfaces 121 has the same size. For example, curvature radius R of one convex surface 121 is 246 µm, width W1 (length in the first direction) of one convex surface 121 is 440 µm, and pitch P_{CL} of the plurality of convex surfaces 121 is 440 µm. The term "pitch" is the distance between first ridgelines 122 (light axes LA or central axes CA) of convex surfaces 121 adjacent to each other in the first direction, and is also the length (width) of convex surface 121 in the first direction. The term "light axes LA of convex surface 121" or "central axes CA of convex surface 121" are straight lines, each of which pass through the center of convex surface 121 and extends along the second direction (in FIG. 2 the Z direction) perpendicular to the first direction (the X direction) and the third direction (the Y direction) in plan view of convex surface 121.

In a cross section along the second direction (height direction) including a straight line extending in the first direction (the X direction), the shape of convex surface 121 may be a curve or an arc. The term "curve" means a curve other than an arc, and means, for example, a curve composed of arcs having different curvature radiuses. Preferably, in the present embodiment, the curve is a curve whose curvature radius increases in the direction away from first ridgeline 121 of convex surface 121.

Detection object parts 141 are disposed opposite to respective convex surfaces 121, and are projected onto respective convex surfaces 121 in the form of optically detectable images. In plan view of marker 100, detection object part 141 extends along the third direction (the Y direction). The configuration of detection object parts 141 is not limited as long as detection object parts 141 are projected onto respective convex surfaces 121 in the form of optically detectable images as described above. Detection object part 141 may be a recess or a protrusion. In the present embodiment, detection object part 141 is a recess. The shape of the recess is not limited as long as the recess has a predetermined width in plan view of marker 100. In addition, coating film 143 formed by applying a coating material may be disposed in the recess. In the present embodiment, in plan view, detection object part 141 has a rectangular shape elongated in the third direction.

In addition, the depth of the recess that serves as detection object part 141 is not limited as long as a desired function (indication of images) can be ensured. The range of the depth of the recess that serves as detection object part 141 may be 10 to 100 µm. In the present embodiment, the depth of the recess that serves as detection object part 141 is 10 µm. Length (width) W2 of the recess that serves as detection object part 141 in the first direction (the X direction) is 45 µm, for example. When width W2 of detection object part 141 is small with respect to P_{CL}, the contrast of the image observed on convex surface 121 side tends to be improved, and the clearness of the edge of the mark tends to be increased. The larger the width W2 of detection object part 141 with respect to P_{CL}, the easier the production of detection object part 141. Preferably, the ratio of width W2 of detection object part 141 to pitch P_{CL} (W2/P_{CL}) is 1/200 to 1/5 in view of obtaining a sufficiently clear image.

Detection object part 141 is disposed at a position where the image of detection object part 141 appears at a center portion of convex surface 121 when marker 100 is viewed from front surface 120 side at the center of convex surface 121 in the first direction (the X direction) and the third direction (the Y direction).

For example, in the first direction (the X direction), detection object part 141 corresponding to convex surface 121 located at the center of front surface 120 (in FIG. 2B, convex surface 121 of n=0) is disposed at a position where center C₀ thereof overlaps central axis CA of the convex surface 121 of n=0.

The center-to-center distance (|Cₙ-Cₙ₋₁|) between detection object parts 141 corresponding to convex surfaces 121 adjacent to each other in the first direction (the X direction) is represented by P_{CL}+nG (µm). As described above, P_{CL} represents the distance between first ridgelines 122 of convex surfaces 121 adjacent to each other in the first direction (the X direction). In addition, G represents a predetermined distance (e.g. 8 µm) from P_{CL} in the first direction for ensuring the optical effect of images. Further, n represents an order of a certain convex surface 121 with respect to 0th convex surface 121 located at the center in the first direction (the X direction).

With this configuration, detection object parts 141 corresponding to convex surfaces 121 other than convex surface 121 located at the center (n=0) are disposed outside central axes CA of respective convex surfaces 121 in the first direction (the X direction).

Coating film 143 is formed at detection object part 141. Coating film 143 is a solidified black liquid coating material, for example.

Coating film 143 is produced through application and solidification of a coating material. The black liquid coating material has fluidity, and is a liquid composition or powder. The method of applying or solidifying the coating material may be appropriately selected from publicly known methods in accordance with the coating material. Examples of the application method of the black liquid coating material include spray coating and screen printing. Examples of the solidification method of the black liquid coating material include drying of a black liquid coating material, curing of a curable composition (such as radical polymerizable compound) in a black liquid coating material, and baking of powder.

Coating film 143 forms an optically discriminable portion. The term "optically discriminable" means that coating film 143 and another portion are clearly different in their optical characteristics. The term "optical characteristics" means, for example, the degrees of the color such as brightness, saturation and hue, or the optical intensity such as luminance. The difference may be appropriately set in accordance with the use of marker 100, and may be a difference which can be visually checked, or a difference which can be confirmed with an optical detection apparatus, for example. In addition, the difference may be a difference which can be directly detected from coating film 143, or a difference which can be detected through an additional operation such as irradiation of an UV lamp as in the case where coating film 143 is a transparent film that emits fluorescence, for example.

Reflection part 142 is regions other than the regions of detection object part 141 in second surface 140. Reflection part 142 includes a plurality of protrusions 151. The shape of each protrusion 151 is not limited. The shape of protrusion 151 may be a triangular pyramid, a square pyramid, or another polygonal pyramid. In addition, the shape of protrusion 151 may be a substantially polygonal pyramid that is obtained by chamfering the corners of a polygonal pyramid. In the present embodiment, the shape of protrusion 151 is a regular square pyramid. A pair of opposing side surfaces 151a and a pair of opposing side surfaces 151b of the four side surfaces of the regular square pyramid function as incidence surfaces or reflection surfaces. The pairs of opposite two side surfaces 151a and 151b are formed to totally reflect incident light from first surface 120 toward first surface 120.

Protrusions 151 are disposed on a plane that passes through the opening edges of the recesses serving as detection object parts 141 and extends along the first direction (the X direction) and the third direction (the Y direction). Protrusions 151 are arranged on the plane along a fourth direction (the V direction in FIG. 3) and a fifth direction (the W direction in FIG. 3) orthogonal to the fourth direction. Here, each of the fourth direction and the fifth direction is different from the first direction (the X direction) or the third direction (the Y direction). In addition, protrusions 151 are arranged with no gap therebetween in the fourth direction (the V direction) and the fifth direction (the W direction). Second valley bottom line 153 is formed between protrusion lines 152 composed of protrusions 151 disposed along the fourth direction (the V direction). Likewise, second valley bottom line 153 is formed between two protrusion lines 152 composed of the protrusions disposed along the fifth direction (the W direction). That is, in the present embodiment, protrusions 151 are disposed in reflection part 142 such that second valley bottom line 153 is periodically disposed between each protrusion 151 in the fourth direction (the V direction) and the fifth direction (the W direction).

In addition, in plan view of first surface 120, second valley bottom line 153 is tilted with respect to first ridgeline 122. Preferably, inclination angle θ1 of second valley bottom line 153 with respect to first ridgeline 122 is, but not limited to, 10 degrees to 80 degrees, both inclusive, more preferably, 30 degrees to 60 degrees, both inclusive. As elaborated later, when inclination angle θ1 of second valley bottom line 153 with respect to first ridgeline 122 falls outside the above-described range, the molten resin does not spread out over the entire metal mold, and the effect might not be sufficiently ensured. Consequently, marker 100 having a desired shape might not be obtained. In the present embodiment, inclination angle θ1 of second valley bottom line 153 with respect to first ridgeline 122 is 45 degrees. The term "inclination angle θ1 of second valley bottom line 153 with respect to first ridgeline 122" is the smaller one of the angles between first ridgeline 122 and second valley bottom line 153.

When marker 100 is placed on a white object, light incident on detection object part 141 through convex surface 121 is absorbed by coating film 143. On the other hand, light incident on reflection part 142 through convex surface 121 is reflected by side surfaces 151a or by side surfaces 151b and returned to convex surface 121. As a result, an image of a line of a color (black) of coating film 143 is projected on convex surface part 121 with a white background.

Since detection object parts 141 are appropriately disposed in accordance with their distances from the center of marker 100 in the first direction, a black collective image of black line images is observed when marker 100 is observed from front surface 120 side.

For example, when marker 100 is viewed from the center of lenticular lens part 120 in the first direction (the X direction), the black collective image is observed at a center portion in the first direction. When marker 100 is observed at a different angle with respect to the first direction (the X direction), the collective image is observed at a different position in the first direction depending on the angle. That is, the angle of the observation position of marker 100 is determined based on the position of the collective image in the first direction (the X direction).

### Manufacturing method of marker

Next, a method of manufacturing marker 100 is described. Marker 100 according to the present embodiment is manufactured by injection molding. The method of manufacturing marker 100 by injection molding includes a mold clamping step for clamping the metal mold in such a manner that a cavity is formed inside the metal mold, a filling step for filling the inside (cavity) of the metal mold with molten resin, a pressure holding step for holding the pressure on the resin supplied in the cavity, and a mold opening step for opening the metal mold.

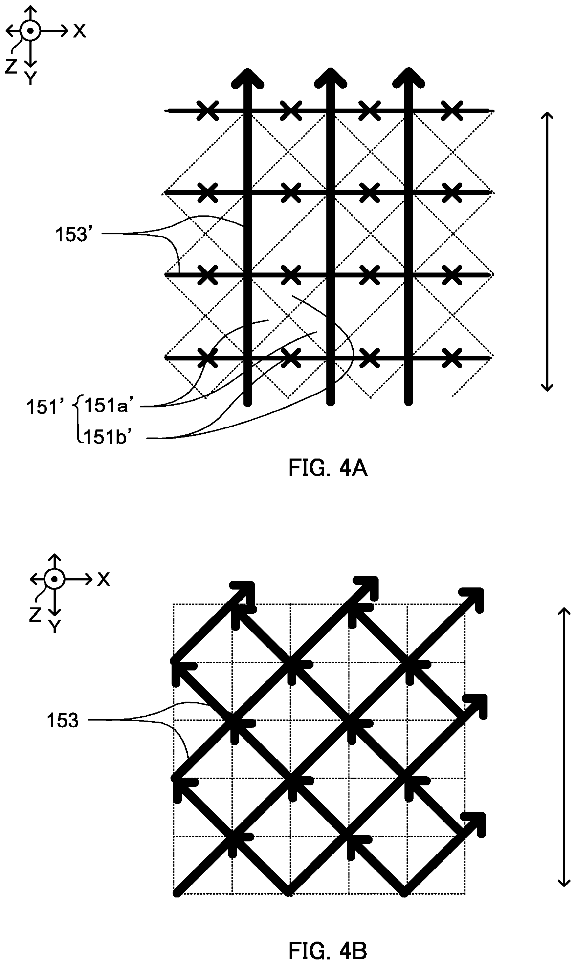

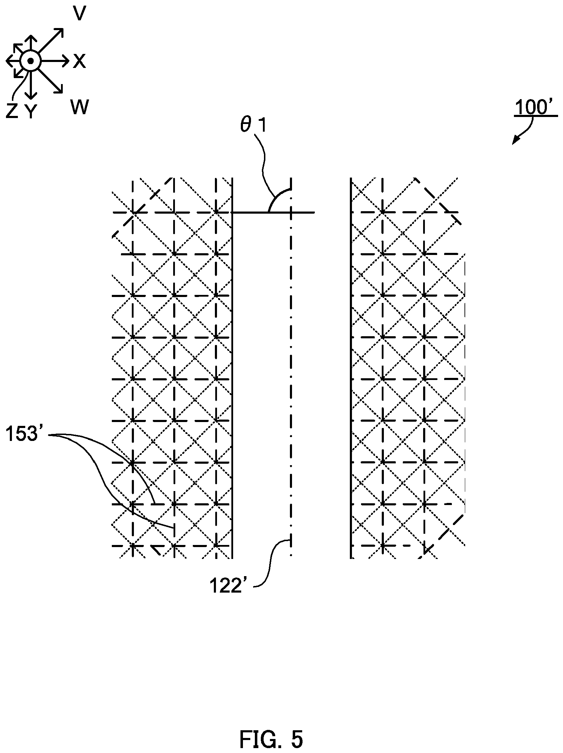

Now the flow of molten resin in the filling step is described. FIGS. 4A and 4B are schematic views for describing flow of molten resin in the filling step in injection molding. FIG. 4A is a schematic view for describing flow of molten resin in the filling step in manufacturing of a marker according to a comparative example, and FIG. 4B is a schematic view for describing flow of molten resin in the filling step in manufacturing of marker 100 according to the present embodiment. The thickness of the heavy arrow in FIGS. 4A and 4B indicates the ease of the flow of molten resin. The two-headed arrows on the right side in FIGS. 4A and 4B indicate the extending direction of first ridgeline 122. Further, in FIGS. 4A and 4B, the molten resin is supplied from the lower side toward the upper side. FIG. 5 is a partially enlarged plan view of marker 100' according to a comparative example. As illustrated in FIG. 5, in marker 100' according to the comparative example, first ridgeline 122' and second valley bottom line 153' are parallel or perpendicular to each other. That is, in marker 100' according to the comparative example, the inclination angle θ1' of second valley bottom line 153' with respect to first ridgeline 122' is 0° or 90°. In addition, the thickness of marker 100' according to the comparative example is 1 mm.

As illustrated in FIG. 4A and FIG. 5, in manufacturing of marker 100' according to the comparative example, molten resin is smoothly supplied to regions configured to serve as second valley bottom lines 153' that are parallel to first ridgeline 122'. Accordingly, second valley bottom lines 153' that are parallel to first ridgeline 122' are appropriately molded. On the other hand, molten resin is not smoothly supplied to regions configured to serve as second valley bottom lines 153' that are perpendicular to first ridgeline 122'. Accordingly, second valley bottom lines 153' that are perpendicular to first ridgeline 122' cannot be appropriately molded. That is, in marker 100' according to the comparative example, second valley bottom lines 153' that are parallel to first ridgeline 122' are appropriately formed, and accordingly two side surfaces 151a' in contact with the second valley bottom lines 153' can have proper optical characteristics. On the other hand, second valley bottom lines 153' that are perpendicular to first ridgeline 122' are not appropriately formed. To be more specific, in a cross section including a straight line along the second direction (the Z direction) and a straight line along the third direction (the Y direction), protrusion 151' is a gentle curve from the apex toward the region configured to serve as second valley bottom line 153'. Accordingly, two side surfaces 151b' in contact with the second valley bottom line 153' do not provide desired optical characteristics. Accordingly, while the light reaching side surfaces 151a' is reflected twice and then returned to an appropriate direction, the light reaching side surfaces 151b' are not appropriately reflected, and as a result, the uniformity of reflection light is poor in its entirety. Such non-uniform supply entailing variation in flow of molten resin significantly occurs in the case where the thickness of marker 100' is 1 mm or smaller. In addition, the closer, to 1:1, the ratio of the distance (P_{CL}) between first ridgelines 122' of the convex surfaces adjacent to each other in the first direction (the X direction) to the distance between second valley bottom lines 153' adjacent to each other, the higher the possibility of occurrence of moire. For example, moire might be caused even when the ratio is about 1:30, and desired optical characteristics might not be ensured. Further, in the thickness direction of marker 100', regarding the relationship between the convex surface of the first surface and protrusion 151 of the second surface, the difference in thickness between the thick portions and the thin portions might be large, and productivity might be reduced.

In contrast, in manufacturing of the marker according to the present embodiment in which second valley bottom lines 153 are tilted with respect to first ridgeline 122 (inclination angle θ1 is 45 degrees) as illustrated in FIG. 4B, molten resin is smoothly supplied to the regions configured to serve as second valley bottom lines 153. Accordingly, all second valley bottom lines 153 are appropriately molded. That is, marker 100 having desired optical characteristics can be manufactured. Thus, retroreflection of light incident on convex surface 121 can be appropriately achieved. In addition, as viewed from first surface 120 side, the direction of first ridgeline 122 and the direction of retroreflection of light incident on convex surface 121 are different from each other, and therefore the possibility of occurrence of moire is low. In addition, since second valley bottom lines 153 are tilted with respect to first ridgeline 122, molten resin is smoothly supplied to the regions configured to serve as second valley bottom lines 153, and thus productivity is not impaired. Thus, in marker 100 of Embodiment 1, molten resin is smoothly supplied and a desired shape is achieved even when the thickness is 1 mm.

### Modification

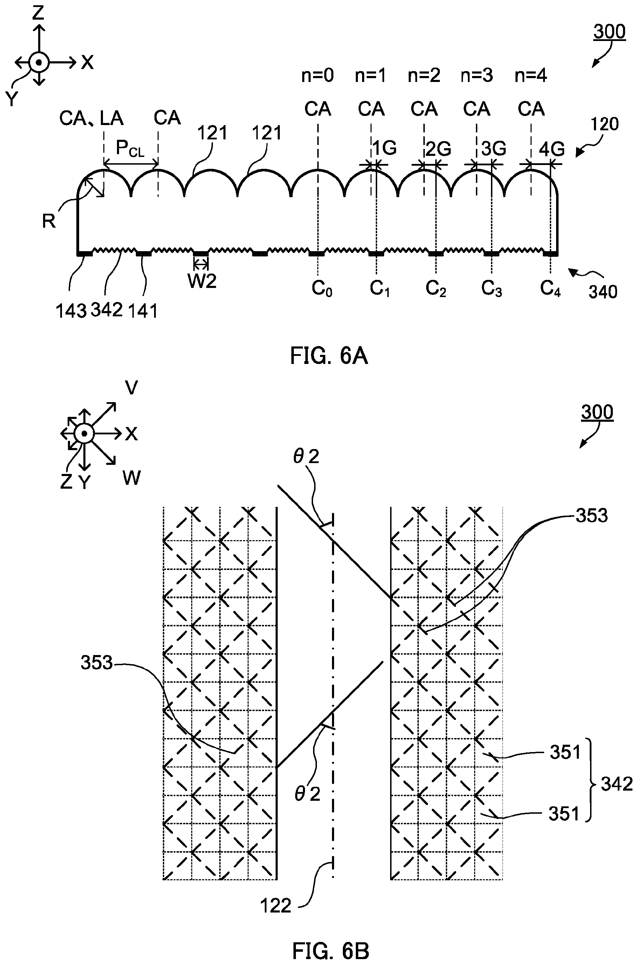

FIGS. 6A and 6B illustrate a configuration of marker 300 according to a modification of Embodiment 1. FIG. 6A is a front view of marker 300 according to the modification of Embodiment 1, and FIG. 6B is a partially enlarged view of FIG. 6A.

As illustrated in FIGS. 6A and 6B, marker 300 according to the modification of Embodiment 1 includes front surface (first surface) 120 and rear surface (second surface) 340. Front surface 120 includes a plurality of convex surfaces 121. In addition, rear surface 340 includes a plurality of detection object parts 141, and a plurality of reflection parts 342 including a plurality of recesses 351.

Recesses 351 are disposed on a plane that passes through the opening edges of recesses that serve as detection object parts 141 along a first direction (the X direction) and a third direction (the Y direction). Recesses 351 are arranged on the plane with no gap therebetween along a fourth direction (in FIG. 4, the V direction) and a fifth direction orthogonal to the fourth direction (in FIG. 4, the W direction). Second ridgeline 353 is cyclically formed between each recess 351 disposed along the fourth direction. Likewise, second ridgeline 353 is cyclically formed between each recess 351 disposed along the fifth direction.

In addition, in plan view of first surface 120, second ridgeline 353 is tilted with respect to first ridgeline 122. Preferably, inclination angle θ2 of second ridgeline 353 with respect to first ridgeline 122 in plan view of first surface 120 is, but not limited to, 10 degrees to 80 degrees, both inclusive, more preferably, 30 degrees to 60 degrees, both inclusive. When inclination angle θ2 of second ridgeline 353 with respect to first ridgeline 122 falls outside the above-described range, the molten resin does not spread out over the entire metal mold, and the effect might not be sufficiently ensured. Consequently, marker 100 having a desired shape might not be obtained. The term "inclination angle θ2 of second ridgeline 353 with respect to first ridgeline 122" means smaller one of the angles between second ridgeline 353 and first ridgeline 122.

### Effect

As described above, in markers 100 and 300 according to the present embodiment, second valley bottom line 153 or second ridgeline 353 are tilted with respect to first ridgeline 122. Thus, markers 100 and 300 according to the present embodiment can improve the productivity while maintaining the optical characteristics.

### Embodiment 2

Marker 200 according to Embodiment 2 is different from marker 100 according to Embodiment 1 only in configuration of reflection part 242. In view of this, the configurations similar to those of light emitting device 100 according to Embodiment 1 will be denoted with the same reference numerals, and the description thereof will be omitted.

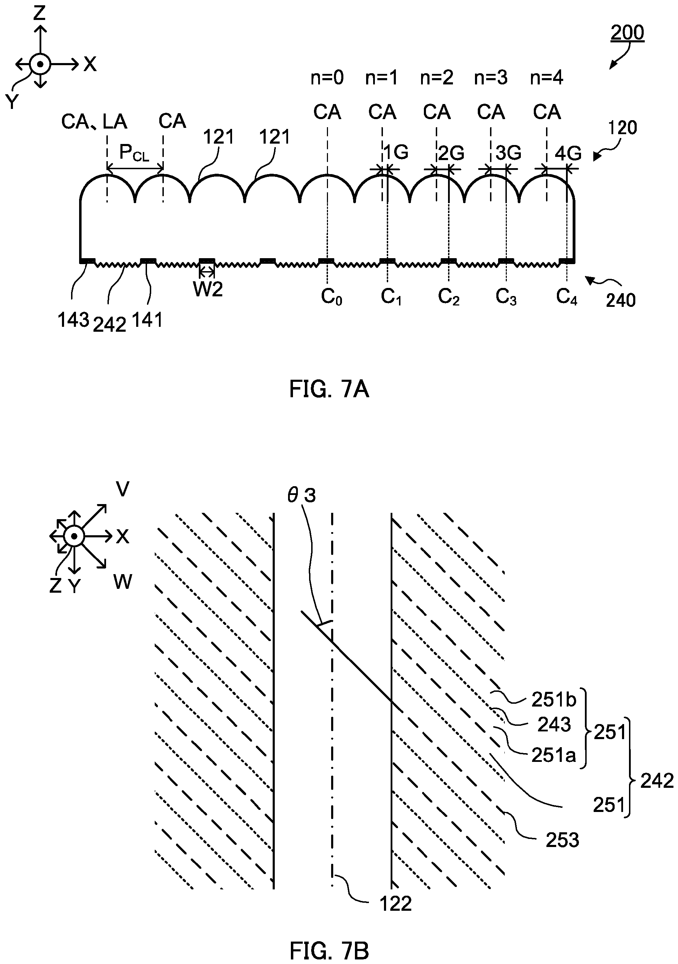

FIGS. 7A and 7B illustrate a configuration of marker 200 according to Embodiment 2 of the present invention. FIG. 7A is a front view of marker 200 according to Embodiment 2 of the present invention, and FIG. 7B is a partially enlarged plan view of FIG. 7A.

As illustrated in FIGS. 7A and 7B, marker 200 includes front surface (first surface) 120 and rear surface (second surface) 240. Front surface 220 includes a plurality of convex surfaces 121. In addition, rear surface 240 includes a plurality of detection object parts 141 and a plurality of reflection parts 242.

Reflection part 242 includes a plurality of protrusions 251 or a plurality of recesses. In the present embodiment, reflection part 242 includes a plurality of protrusions. Protrusion 251 is a linear projected surface including first side surface 251a, second side surface 251b, and third ridgeline 243 disposed between first side surface 251a and second side surface 251b. First side surface 251a and second side surface 251b are formed such that second side surface 251b (first side surface 251a) causes retroreflection, toward first surface 120, of light which is incident on first surface 120 and reflected by first side surface 251a (second side surface 251b).

Protrusions 251 are disposed on a plane that passes through the opening edges of the recesses that serve as detection object parts 141 and extends along a first direction (the X direction) and a third direction (the Y direction). Protrusions 251 are arranged on the plane with no gap therebetween along a fourth direction (in FIG. 7, the V direction). That is, in the present embodiment, in reflection part 242, protrusions 251 are disposed such that second valley bottom line 253 is cyclically disposed between each protrusion 251 in the fourth direction (the V direction).

In addition, in plan view of first surface 120, second valley bottom line 253 is tilted with respect to first ridgeline 122. Preferably, inclination angle θ3 of second valley bottom line 253 with respect to first ridgeline 122 in plan view of first surface 120 is, but not limited to, 10 degrees to 80 degrees, both inclusive, more preferably, 30 degrees to 60 degrees, both inclusive. The term "inclination angle θ3 is second valley bottom line 253 with respect to first ridgeline 122" means smaller one of the angles between second valley bottom line 253 and first ridgeline 122.

In addition, in the marker according to the comparative example in which the first ridgeline and the second valley bottom line are in parallel to each other, the closer, to 1:1, the ratio of the distance (P_{CL}) between first ridgelines 122' of the convex surfaces adjacent to each other in the first direction (the X direction) to the distance between second valley bottom lines 153' adjacent to each other, the higher the possibility of occurrence of moire. For example, moire might be caused even when the ratio is about 1:30, and desired optical characteristics might not be ensured. On the other hand, in marker 200 according to Embodiment 2, as viewed from first surface 120 side, the direction of first ridgeline 122 and the direction of retroreflection of light incident on convex surface 121 are different from each other, and therefore the possibility of occurrence of moire is low.

### Effect

Thus, marker 200 according to Embodiment 2 causes less moire.

While detection object parts 141 corresponding to convex surfaces 121 other than convex surface 121 located at the center (n=0) are disposed outside central axes CA of respective convex surfaces 121 in the first direction (the X direction) in Embodiments 1 and 2, detection object parts 141 corresponding to convex surfaces 121 other than convex surface 121 located at the center (n=0) may be disposed inside central axes CA of respective convex surfaces 121 in the first direction.

In addition, while detection object part 141 is a recess in Embodiments 1 and 2, detection object part 141 may be a protrusion. In this case, coating film 143 may be formed on the top of the protrusion. In addition, coating film 143 in Embodiments 1 and 2 may be a colored seal.

Further, detection object part 141 may be a reflection surface composed of an irregularity of pyramidal minute prism, a metal-vapor deposited film or the like which is formed in the recesses and/or the region other than the recesses.

In addition, in Embodiment 2, reflection surface 242 may include a plurality of recesses. In this case, the recess is a recessed line surface with a third valley bottom line extending in the fifth direction (the W direction).

This application is entitled to and claims the benefit of Japanese Patent Application No. 2016-037340 filed on February 29, 2016, the disclosure each of which including the specification, drawings and abstract is incorporated herein by reference in its entirety.

### Industrial Applicability

The marker according to the embodiments of the present invention is suitable as a position detecting marker (or an angle detecting marker) for recognizing the position, orientation and the like of an object, and is suitable for expanding the effective observation range of the marker toward a specific direction. Accordingly, the present invention is expected to contribute to development of the technical fields of the above-mentioned marker.

### Reference Signs List

100, 200, 300 Marker
120 First surface
121 Convex surface
122 First ridgeline
140, 240, 340 Second surface
141 Detection object part
142, 242, 342 Reflection part
143 Coating film
151, 251 Protrusion
151a, 151b, 251a, 251b Side surface
152 Protrusion line
153, 253 Second valley bottom line
243 Third ridgeline
351 Recess
353 Second ridgeline

## Claims

1. A marker formed of an optically transparent material, the marker comprising:
a first surface in which a plurality of convex surfaces each of which includes a first ridgeline extending along a first direction are arranged in a second direction perpendicular to the first direction, each convex surface having a cylindrical shape; and
a second surface including a plurality of detection object parts and a reflection part, the reflection part including a plurality of recesses or a plurality of protrusions, the plurality of detection object parts being disposed at positions opposite to respective convex surfaces and configured to be projected onto the respective convex surfaces as optically detectable images, the reflection part being a region other than regions of the plurality of detection object parts,
wherein, in the reflection part, the plurality of recesses are disposed in such a manner that second ridgelines are cyclically disposed, each second ridgeline being disposed between each recess, or the plurality of protrusions are disposed in such a manner that second valley bottom lines are cyclically disposed, each second valley bottom line being disposed between each protrusion, and
wherein, in plan view from the first surface side, the plurality of second ridgelines or the plurality of second valley bottom lines are tilted with respect to the first ridgeline.

2. The marker according to claim 1, wherein each recess or each protrusion of the reflection part has a square pyramidal shape.

3. The marker according to claim 1, wherein, in plan view from the first surface side, each recess or each protrusion of the reflection part is composed of a recessed line surface including a third valley bottom line tilted with respect to the first ridgeline, or is composed of a linear projected surface including a third ridgeline tilted with respect to the first ridgeline.

4. The marker according to any one of claims 1 to 3, wherein, in plan view from the first surface side, an inclination angle of the second ridgeline or the second valley bottom line with respect to the first ridgeline falls within a range of 10 degrees to 80 degrees.
